Europäisches Patentamt

European Patent Office

Office européen des brevets

(19)

(11) Veröffentlichungsnummer : **0 053 721 B1**

(12) # EUROPÄISCHE PATENTSCHRIFT

(45) Veröffentlichungstag der Patentschrift :
02.12.87

(21) Anmeldenummer : 81109264.2

(22) Anmeldetag : 30.10.81

(51) Int. Cl.⁴ : **G 01 M   3/24, G 01 M   3/28**

(54) **Verfahren und Einrichtungen zum Orten von Leckstellen in Rohrleitungen.**

(30) Priorität : 04.12.80 DE 3045660

(43) Veröffentlichungstag der Anmeldung :
16.06.82 Patentblatt 82/24

(45) Bekanntmachung des Hinweises auf die Patenterteilung : 02.12.87 Patentblatt 87/49

(84) Benannte Vertragsstaaten :
AT BE CH DE FR GB IT LI LU NL SE

(56) Entgegenhaltungen :
DE-B- 1 065 678

(73) Patentinhaber : FRAUNHOFER-GESELLSCHAFT ZUR FÖRDERUNG DER ANGEWANDTEN FORSCHUNG E.V.
Leonrodstrasse 54
D-8000 München 19 (DE)

(72) Erfinder : Fuchs, Helmut V, Dr.-Ing.
Mühlweg 39
7031 Weil i.S. (DE)
Erfinder : Schupp, Gerold, Dipl.-Ing.
Grüningerstrasse 50
D-7000 Stuttgart 70 (DE)
Erfinder : Voigtsberger, Carl-Alexander
Im Asenwald 22/6/346
D-7000 Stuttgart 70 (DE)

(74) Vertreter : Kraus, Walter, Dr. et al
Patentanwälte Kraus, Weisert & Partner Thomas-Wimmer-Ring 15
D-8000 München 22 (DE)

EP 0 053 721 B1

**Beschreibung**

Die Erfindung betrifft ein Verfahren zum Orten von Leckstellen an ein Strömungsmedium, zum Beispiel Fluid, führenden Rohrleitungen, insbesondere in Wasserversorgungsnetzen, bei dem die von dem Geräusch des an der Leckstelle ausströmenden Fluids erzeugten Schallwellen durch Schallempfänger im Bereich längs der Rohrleitung aufgenommen werden und aus den Meßsignalen mittels eines Korrelationsverfahrens die Laufzeit der Schallwellen und damit die Entfernung der Leckstelle von den Meßstellen bestimmt wird. Außerdem betrifft die Erfindung eine Einrichtung zur Durchführung dieses Ortungsverfahrens.

Es sind zahlreiche Verfahren und Einrichtungen zum Orten von Leckstellen in Rohrleitungen bekannt, die von der Tatsache Gebrauch machen, daß durch das an der Leckstelle ausströmende Fluid ein Geräusch erzeugt wird, dessen Schallwellen sich in die Umgebung der Leckstelle mit abnehmender Intensität ausbreiten. Bei den ältesten und einfachsten dieser Verfahren versuchte man die von einer Leckstelle ausgehenden Schallwellen in Wasserversorgungsleitungen mit dem Ohr unter Zuhilfenahme von auf freiliegenden Leitungsteilen, wie Hydranten oder Schachtdeckeln, abgestützten Hörstäben oder von auf den Erdboden oberhalb der Leitung aufgesetzten Schallglocken bis zu ihrem Ursprung, d. h. der Leckstelle, hin zu verfolgen. Diese Suchverfahren werden aber durch Fremdgeräusche, z. B. den Verkehrslärm, stark gestört und durch Inhomogenitäten des Bodens oder der Leitung verfälscht, so daß sie nur selten eine ausreichend sichere und genaue Lokalisierung der Leckstelle ermöglichen.

Der Ersatz des menschlichen Ohres durch ein Mikrophon oder einen anderen Schallaufnehmer kann diese Mängel nicht ausreichend beheben, auch wenn dabei eine selektive, auf ein charakteristisches Schallspektrum der Geräuschquelle abgestimmte Sensortechnik Verwendung findet (vgl. US-PSen 3 261 200, 3 626 750).

Zur akustischen Ortung von Leckstellen in Rohrleitungen ist gemäß der DE-OS 2 352 532 (Figur 6) auch schon eine Anordnung von zwei im Abstand voneinander angeordneten Schallaufnehmern bekannt, deren Meßsignale in einem Kreuzkorrelationsverfahren (ohne Zeitverzögerung der Signale) zur Bestimmung der Lage der Geräuschquelle im Verhältnis zu den Schallaufnehmern ausgewertet werden. Da die Schallaufnehmer hierbei in einen durch die Leitung wandernden Rohrmolch eingebaut sind, läßt sich wegen der dort beschränkten Platzverhältnisse kaum ein für genaue Messungen erforderlicher Abstand zwischen den Sensoren verwirklichen. Überdies verbleibt das Problem, daß für die Ortung einer festgestellten Leckstelle auch die jeweilige Position des Molches in der Leitung durch zusätzliche Messungen ermittelt werden muß.

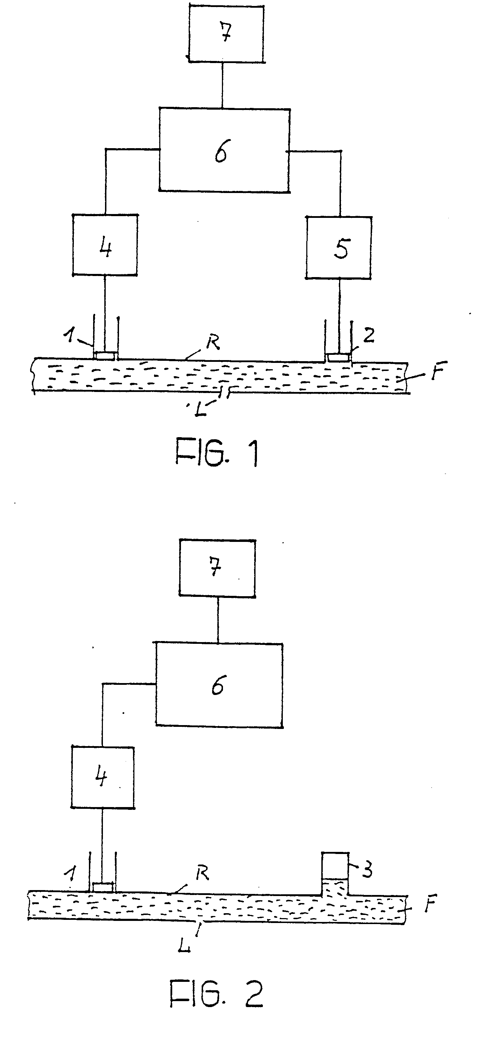

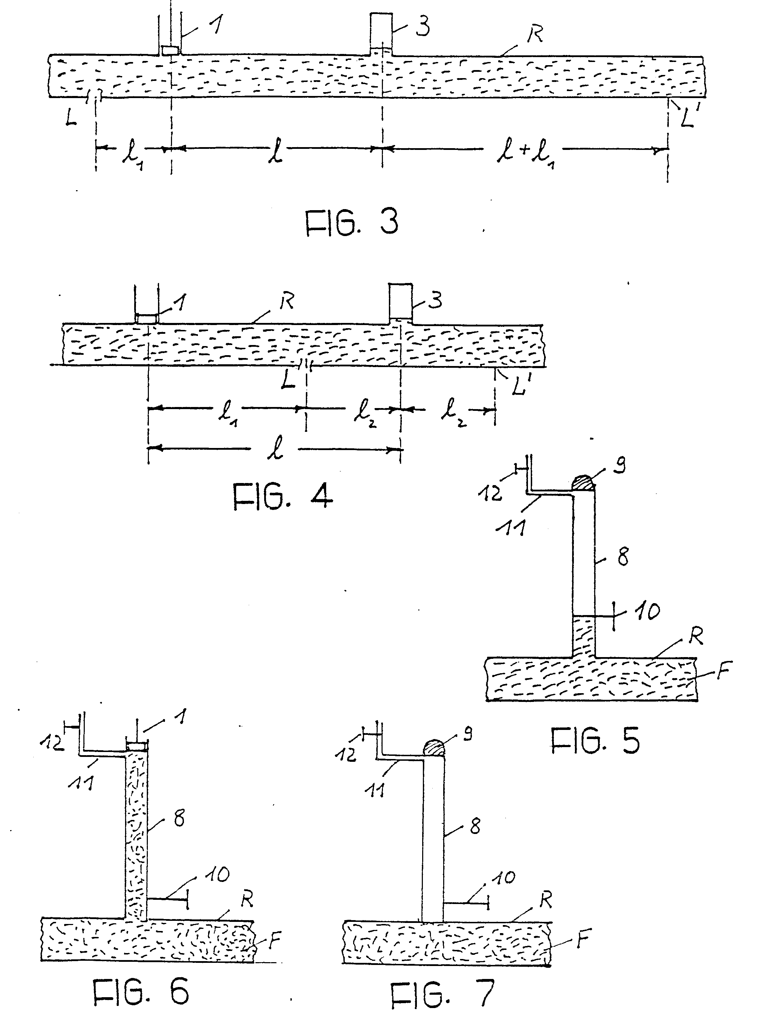

Am nächsten kommt dem Gegenstand der Erfindung im Stand der Technik das Leckortungsverfahren nach der US-PS 3 930 556, bei dem längs einer Flüssigkeitsleitung im bekannten Abständen eine Anzahl von Schallempfängern angeordnet ist, die auf die von einer etwaigen Leckstelle ausgesandten Schallwellen ansprechen und aus deren Ausgangssignalen u. a. mittels eines Kreuzkorrelationsverfahrens die Laufzeit-Differenzen der Signale und damit die Entfernung der Leckstelle von den ihr am nächsten gelegenen Meßstellen ermittelt wird. Bei einer Ausführungsform dieses Verfahrens ist die Rohrleitung in radialem Abstand von einem in Abschnitte unterteilten schalldämmenden Mantel umgeben, in den die Schallempfänger eingesetzt sind. Diese Meßanordnung ist schon wegen des Mantelrohres baulich sehr aufwendig. Die in der genannten Patentschrift anhand der Figuren 1 und 7 weiter beschriebene Meßanordnung weist kein Mantelrohr, sondern direkt an die Rohrwand angesetzte Schallempfänger auf. Diese sind dann aber nicht gegen Störschall geschützt. Beide Anordnungen erfordern außerdem eine Vielzahl von Kabelverbindungen zu den einzelnen Schallempfängern und zu den Meßinstrumenten.

Aufgabe der Erfindung ist es, ein Verfahren und eine Einrichtung zum Orten von Leckstellen an Rohrleitungen anzugeben, das bzw. die keine wesentlichen baulichen Änderungen an der Rohrleitung, wenige Kabelverbindungen und keinen großen meßtechnischen Aufwand erfordert. Das Verfahren soll einfach durchzuführen sein. Außerdem soll der Einfluß von über die Leitung oder aus ihrer Umgebung kommenden Störgeräuschen auf die Meßergebnisse stark vermindert sein.

Das Verfahren, mit dem diese Aufgabe gelöst wird und das ein Verfahren der eingangs genannten Art ist, zeichnet sich erfindungsgemäß dadurch aus, daß an der Rohrleitung ein Schallempfänger und in einem bekannten Abstand von diesem ein Schallreflektor angeordnet werden, die beide unmittelbar von dem Fluid beaufschlagt werden, und daß von dem Schallempfänger nicht nur die von der Leckstelle direkt ankommenden, sondern, auch die von dem Schallreflektor zurückgeworfenen Schallwellen erfaßt werden und das aufgenommene Signal durch eine Autokorrelationsanalyse ausgewertet wird.

Die Einrichtung zum Durchführen dieses Ortungsverfahrens, mit welcher die vorstehend genannte Aufgabe gelöst wird, zeichnet sich erfindungsgemäß aus durch einen an einer Rohrleitung angeordneten Schallempfänger, einen in bekanntem Abstand von diesem angeordneten Schallreflektor und eine Vorrichtung zur Autokorrelationsanalyse der vom Schallempfänger gelieferten Signale, und durch eine solche Ausbildung des Schallreflektors, daß dieser die aus dem dem Schallempfänger abgewandten Abschnitt der Rohrleitung kommenden Störgeräusche entweder ebenfalls reflektiert oder absorbiert.

Weiterbildungen des Verfahrens nach der Erfindung sind in den abhängigen Ansprüchen 2 bis 5 angegeben, während Weiterbildungen der erfindungsgemäßen Einrichtung in den abhängigen Ansprüchen 7 bis 11 angegeben sind.

2

Der Grundgedanke der Erfindung besteht darin, daß bei der bekannten Paarung von zwei an den Enden einer Meßstrecke angeordneten Schallempfängern zum Orten einer zwischen ihnen befindlichen, geräuscherzeugenden Leckstelle mittels eines Kreuzkorrelationsverfahrens einer der Schallempfänger durch einen Schallreflektor ersetzt wird, der die von der Leckstelle zu ihm kommenden Schallwellen in Richtung auf den verbleibenden Schallempfänger zurückwirft. In diesem Schallempfänger werden sowohl die von der Leckstelle unmittelbar, als auch die über den Schallreflektor empfangenen Schallwellen in ein elektrisches Signal umgesetzt, aus dem mittels eines Autokorrelationsverfahrens die Laufzeit-Differenzen der beiden Schallwellen und damit die Entfernung der Leckstelle von dem Schallempfänger bzw. dem Schallreflektor ermittelt werden kann.

Der Schallreflektor erzeugt somit von einer etwaigen in der Meßstrecke befindlichen Leckstelle ein akustisches Spiegelbild außerhalb der Meßstrecke. Die von dieser virtuellen zweiten Schallquelle ausgehenden Schallwellen haben an jedem Punkt der Rohrleitung eine ganz bestimmte Phasen- bzw. Laufweg-Differenz relativ zu den von der realen Leckstelle ausgesandten Schallwellen. Wird ein Leitungsabschnitt an einem Ende mit einem Schallreflektor versehen, so kann der Schallempfänger am anderen Ende beide Schallanteile aufnehmen. Dadurch gelingt es, die gleiche Information (als Laufzeit-Differenz), die beim herkömmlichen Zweipunkt-Korrelationsmeßverfahren an zwei getrennten Meßstellen gewonnen wird, in etwas veränderter Form an nur einer Meßstelle aufzunehmen. Der Schallreflektor vermindert außerdem das Eindringen von Störgeräuschen in die Meßstrecke, da er auch die von dem außerhalb der Meßstrecke liegenden, dieser abgewandten Teil der Rohrleitung kommenden Schallwellen in diesen Rohrleitungsteil zurückwirft. Voraussetzung hierfür und für eine genaue Ortung der Leckstelle ist es, daß der Schallempfänger und der Schallreflektor unmittelbar von dem in der Rohrleitung befindlichen Fluid beaufschlagt werden, weil die Ausbreitungsverhältnisse für Schallwellen im Inneren von Rohrleitungen mit etwa konstantem Querschnitt viel eindeutiger sind, als in der Rohrwand oder im Erdboden.

Das Ortungsverfahren nach der Erfindung kann so durchgeführt werden, daß das Spektrum des aufgenommenen Signals vor der Autokorrelationsanalyse durch Filterung aufbereitet wird. Hierbei kann die Filterung derart erfolgen, daß die Korrelationsfunktion eine besonders einfach auswertbare Form erhält.

Die Genauigkeit des erfindungsgemäßen Ortungsverfahrens kann noch weiter verbessert werden, wenn nach einer ersten Messung der Schallempfänger und Schallreflektor gegeneinander ausgetauscht werden und mit dieser Anordnung eine weitere Messung durchgeführt wird.

Wenn die Schallgeschwindigkeit in dem Leitungsfluid, zum Beispiel bei mit Luftblasen versetztem Wasser, nicht mit ausreichender Genauigkeit bekannt ist, muß vor der Leckstellenortung die Ausbreitungsgeschwindigkeit der Schallwellen mittels einer Autokorrelationsanalyse bestimmt werden. Hierfür kann es vorteilhaft sein, wenn in der Rohrleitung ein Schallsender angebracht wird. Das kann ein im Bereich der Meßstrecke von dem Fluid beaufschlagter Schallsender sein. Dieser Schallsender kann zum Beispiel ein elektrisch als Sender geschalteter Schallempfänger sein, der zusätzlich zu dem für das eigentliche Ortungsverfahren erforderlichen Schallempfänger vorgesehen ist.

Besonders vorteilhaft ist es bei Flüssigkeit enthaltenden Rohrleitungen, wenn der Schallreflektor ein Gasvolumen, insbesondere ein Luftvolumen ist, das mit der Flüssigkeit mindestens während der Messungen in Verbindung steht. Ein solches Gasvolumen läßt sich über eine Belüftungseinrichtung leicht an von der Rohrleitung nach oben führenden Abzweigungen, wie Stichleitungen oder Hydranten verwirklichen. Nach Entlüftung und Füllung mit dem Fluid kann dieselbe Abzweigung auch als Anschluß für einen Schallempfänger verwendet werden. Mittels einer solchen Anordnung des Schallempfängers und des Schallreflektors kann das erfindungsgemäße Ortungsverfahren durchgeführt werden, ohne daß zuvor Teile der Rohrleitung durch Grabungen freigelegt werden müssen.

Statt des akustisch weichen Gasvolumens kann, insbesondere bei Gas- oder Dampfleitungen, ein Schallreflektor Verwendung finden, der auf seiner, dem Schallempfänger zugewandten Seite eine akustisch harte Fläche aufweist, wie das bei einem zumindest teilweise geschlossenen Schieber der Fall ist.

Zur Vermeidung von die Ortung störenden Resonanzen ist es vorteilhaft, wenn während jeder Messung in der zu untersuchenden Rohrleitung nur ein von dem Fluid beaufschlagter Schallreflektor vorhanden ist. Abzweigungen, die ein mit der Rohrleitung verbundenes Luftvolumen enthalten können und nicht den jeweiligen Meßreflektor bilden, müssen gegebenenfalls entlüftet werden.

Die Korrelationsverfahren haben gegenüber allen subjektiven, akustischen Leckortungsverfahren, die nur Intensitätsänderungen des Leckstellengeräusches ausnützen, den Vorteil, daß sie weitgehend unabhängig von der Intensität der empfangenen Schallwellen arbeiten. Das Nutzsignal (Eigengeräusch der Leckstelle) kann in der Intensität sogar unter der Summe aller Störsignale liegen, die von anderen akustischen oder elektrischen Störquellen herrühren. Die Störgeräusch-Unterdrückung wird bei dem Verfahren nach der Erfindung noch dadurch erheblich verbessert, daß an einem Ende der Meßstrecke durch den dort vorgesehenen Schallreflektor eine nahezu vollständige Reflexion der von dieser Seite auf der Rohrleitung ankommenden Schallwellen bewirkt wird. Die Meßstrecke ist somit einseitig gegen den auf der Rohrleitung ankommenden Störschall abgeschottet. Durch Vertauschen des Schallempfängers mit dem Reflektor läßt sich die Abschottung nacheinander gegenüber beiden Seiten bewerkstelligen.

Das bei der Erfindung angewandte Einpunkt-Autokorrelationsverfahren bringt gegenüber dem herkömmlichen Zweipunkt-Kreuzkorrelationsverfahren weiter noch die Vorteile einer geringeren Anzahl von Meßgeräten (Schallempfänger, Verstärker, Filter usw.) und der damit verbundenen Ausschaltung von Phasenfehlern durch die Unsymmetrie bei mehreren Meßkanälen. Die Durchführung der Messung wird insgesamt auch dadurch vereinfacht, daß nur an einer Meßstelle gearbeitet wird und nur zu dieser elektrische Kabel verlegt werden müssen. Schließlich kann der Korrelator selbst einfacher aufgebaut werden.

Im folgenden sind das Leckortungsverfahren und die Einrichtungen nach der Erfindung anhand von schematischen Zeichnungen und Blockschaltbildern beispielsweise beschrieben.

Es zeigen die

Figur 1 eine Anordnung zum Orten von Leckstellen mittels des als bekannt vorausgesetzten Zweipunkt-Kreuzkorrelationsverfahrens,

Figur 2 eine entsprechende Anordnung mit Schallreflektor für das erfindungsgemäße Einpunkt-Autokorrelationsverfahren,

Figuren 3 und 4 skizzenhafte Darstellungen der Meßanordnung mit unterschiedlicher Lage der Leckstelle zur Meßstrecke,

Figuren 5 bis 7 Ausbildungen einer lotrechten Stichleitung als Schallempfänger bzw. als Schallreflektor,

Figuren 8 bis 10 Anschlußstücke zum Anbringen eines Schallempfängers bzw. Schallreflektors direkt an einer Rohrleitung.

Figur 11 ein Blockschaltbild der elektrischen Verstärker, Filter und Korrelationsanordnungen.

Der Meßaufbau für das als bekannt vorausgesetzte Zweipunkt-Kreuzkorrelationsverfahren ist in der Figur 1 stark vereinfacht dargestellt. An der ein Fluid F enthaltenden Rohrleitung R sind zwei Schallempfänger 1 und 2 an den Enden eines Meßabschnittes der Länge 1 angebracht, deren Signale über Verstärker-Anordnungen 4 bzw. 5 einem üblichen Korrelator 6 zugeführt werden. Die Ausgabe der Korrelationsfunktion erfolgt über einen x/y-Schreiber 7 oder über ein nicht dargestelltes Oszilloskop.

Den Meßaufbau für das erfindungsgemäße Einpunkt-Autokorrelationsverfahren zeigt in entsprechender Weise die Figur 2. Die mit dem Aufbau nach Figur 1 übereinstimmenden Teile sind dort mit denselben Ziffern versehen. Unterschiedlich zur Figur 1 ist im wesentlichen nur, daß der zweite Schallempfänger 2 durch einen Schallreflektor 3 ersetzt ist, wodurch auch die Verstärker-Anordnung 5 entfällt und die Korrelator 6 nur von den Signalen des verbleibenden Schallempfängers 1 beaufschlagt wird.

Sowohl in der Figur 1 als auch in der Figur 2 ist eine angenommene Leckstelle eingetragen und mit L bezeichnet.

Mit dem Meßaufbau nach der Figur 1 werden die Kreuzkorrelationsfunktionen

$$R_{12}(\tau) = \overline{p_1(t)\,p_2(t + \tau)}$$

und nach Vertauschung der Schallempfänger

$$R_{21}(\tau) = \overline{p_2(t)\,p_1(t + \tau)}$$

ermittelt, wobei $p_1(t)$ und $p_2(t)$ = Zeitfunktionen der Druckpulsationen an den Schallempfängern 1 und 2, $\tau$ = Zeitverzögerung der Signale. Der Strich bedeutet, daß der zeitliche Mittelwert gebildet wird.

Bei dem erfindungsgemäßem Meßaufbau nach der Figur 2 werden dagegen die Autokorrelationsfunktionen bestimmt

$$R_{11}(\tau) = \overline{p_1(t)\,p_1(t - \tau)}$$

und nach Vertauschung des Schallempfängers mit dem Schallreflektor

$$R_{33}(\tau) = \overline{p_3(t)\,p_3(t - \tau)}$$

In beiden Versionen des Korrelationsverfahrens werden $R_{12}$, $R_{21}$ bzw. $R_{11}$, $R_{33}$ auf etwaige Maxima bei $\tau = \tau_{max}$ hin untersucht. Die Form des Maximums bei $\tau_{max}$ hängt dabei von der spektralen Zusammensetzung des Leckgeräusches ab, auf welches das Maximum zurückzuführen ist.

Bei der Darstellung der Korrelationsfunktion über der Zeitverzögerung $\tau$ zeigt sich, daß Maximalwerte der Korrelation $R_0$ in jedem Fall, also auch wenn kein Leckgeräusch vorhanden ist, bei $\tau = 0$ auftreten:

$$R_{11\,(\tau = 0)} = R_{33\,(\tau = 0)} = R_0$$

Ein zweites Maximum $R_{max}$ tritt immer dann auf, wenn sich in der Nähe des Schallempfängers eine Geräuschquelle, z. B. eine Leckstelle, befindet. Dann lassen sich bezüglich der Lage der Leckstelle generell zwei Fälle unterscheiden, die in den Figuren 3 und 4 dargestellt sind. In diesen Figuren gelten dieselben Bezugszeichen wie in den Figuren 1 und 2. Außerdem ist mit L' das akustisch gespiegelte (virtuelle) Bild der realen Leckstelle L bezeichnet. Die Längen $l$, $l_1$, $l_2$ bedeuten den Abstand der Meßstelle

4

(Schallempfänger 1) von dem Schallreflektor 3 bzw. die Entfernungen der tatsächlichen Leckstelle L von der Meßstelle und dem Reflektor.

Bei dem ersten, in der Figur 3 dargestellten Fall, liegt die Leckstelle L außerhalb des Meßabschnittes I. Das zweite Maximum der Korrelationsfunktion tritt dann entsprechend dem Laufweg-Unterschied $\Delta l = 2\,l$ des direkten und des reflektierten Schallanteils bei

$$R_{11}(\tau_{max}) = R_{max} \text{ mit } \tau_{max} = \frac{2\,l}{c_F}$$

auf, wobei $c_F$ die Ausbreitungsgeschwindigkeit der Schallwellen im Fluid ist (bei Wasser z. B. $c_F \cong 1\,400$ m/sec). Das Meßergebnis ist somit unabhängig vom Abstand $l_1$ zwischen der Leckstelle L und der Meßstelle 1. Aus $\tau_{max}$ und der bekannten Meßstreckenlänge $l$ ist nur der jeweilige Wert der Schallgeschwindigkeit $c_F$ zu ermitteln. Die Zuverlässigkeit dieser Messung, die sich durch hohe Störgeräusch-Unterdrückung auszeichnet, läßt sich dadurch kontrollieren, daß anschließend der Schallempfänger 1 mit dem Schallreflektor 3 vertauscht wird. Die Korrelationsfunktion $R_{33}(\tau)$ darf dann kein ausgeprägtes zweites Maximum mehr zeigen, weil die von der Leckstelle L ausgehenden Schallwellen durch den Schallreflektor 3 abgeblockt werden. Man weiß in diesem Falle aber schon nach der ersten Messung, in welcher Richtung der Rohrleitung nach der Leckstelle L durch weitere Messung auf einer anderen Meßstrecke gesucht werden muß.

Bei dem anderen in der Figur 4 dargestellten Fall liegt die Leckstelle L innerhalb der Meßstrecke I. Das zweite Maximum der Korrelationsfunktion tritt jetzt entsprechend dem Laufweg-Unterschied $\Delta l = 2\,l_2$ des direkten und des reflektierten Schallanteils auf bei

$$R_{11}(\tau_{max}) = R_{max} \text{ mit } \tau_{max} = \frac{2\,l_2}{2\,c_F}$$

Dieses Ergebnis der Ortung einer Leckstelle läßt sich noch überprüfen, indem im Anschluß an die erste Messung der Schallempfänger 1 und der Schallreflektor 3 vertauscht werden. Das zweite Maximum der Korrelationsfunktion muß dann bei

$$R_{33}(\tau_{max}) = R_{max} \text{ mit } \tau_{max} = \frac{2\,l_1}{c_F}$$

liegen, wobei $l_1 = l - l_2$ sein muß.

Die Auswertung der Autokorrelationsmessungen, insbesondere die Bestimmung des für die Leckstellenermittlung entscheidenden zweiten Maximums, läßt sich wesentlich erleichtern, wenn das Ausgangssignal des Schallempfängers 1 vor dem Korrelator 6 eine Filteranordnung passiert, in welcher sein Spektrum so aufbereitet wird, daß das zweite Maximum $R_{max}$ besonders deutlich hervortritt.

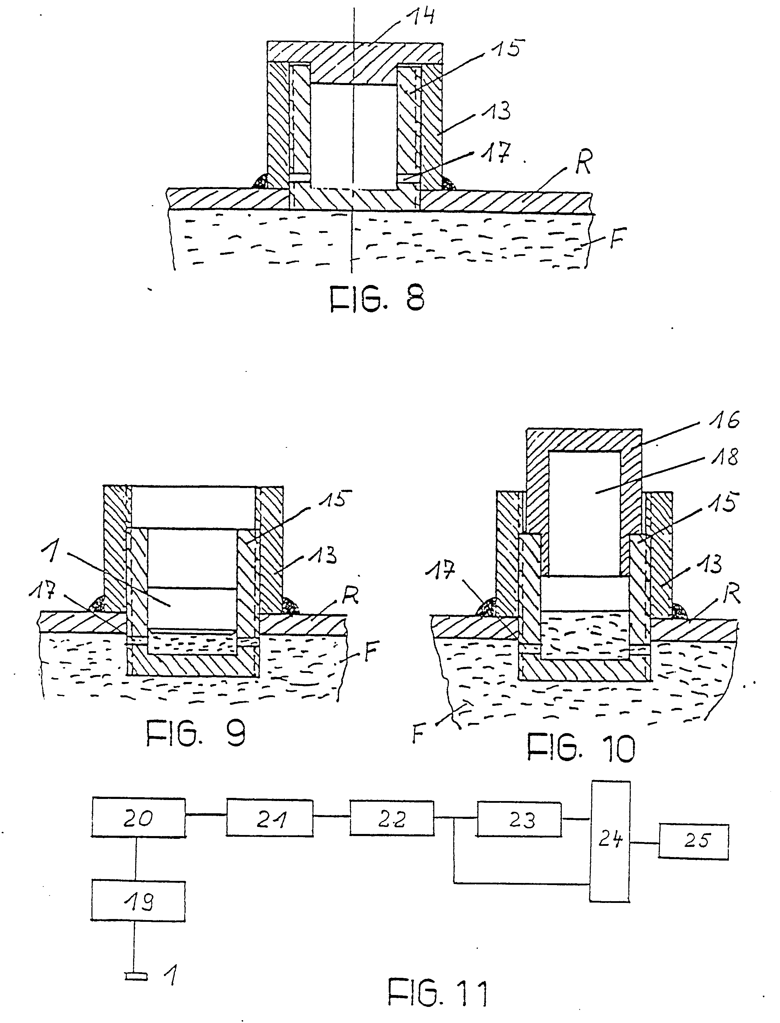

Eine solche Filteranordnung ist in die Figur 11 im Rahmen des gesamten Blockschaltbildes der Autokorrelationsschaltung dargestellt. Gemäß dieser Figur wird das Ausgangssignal des Schallempfängers über einen geeigneten Signal-Verstärker 19 einem Spektrum-Former 20 zugeführt. In diesem kann das Meßsignal z. B. so verändert werden, daß alle Frequenz-Komponenten im gesamten Meßbereich etwa gleich stark gemacht werden. In den nachfolgenden Bandbreiten-Begrenzern 21 und 22 kann das Frequenzband des Meßsignals nach unten (Hochpaß) bzw. nach oben (Tiefpaß) begrenzt werden. Das so für die eigentliche Korrelation optimal aufbereitete Signal wird einmal direkt als $p_1(t)$ und einmal über ein Verzögerungsglied 23 als $p_1(t + \tau)$ (zur Mittelwertbildung) dem Multiplikator/Integrator 24 zugeführt, in dem $R_{11}(\tau)$ gebildet wird. Als Ausgabeeinheit 25 für das Ergebnis (als Funktion von $\tau$) kann ein Oszilloskop oder ein x/y-Schreiber mit einem entsprechend vorbereiteten Raster-Schirm oder -Papier dienen.

Wesentlich für das erfindungsgemäße Leckortungsverfahren ist es, daß sowohl der Schallempfänger 1 als auch der Schallreflektor 3 unmittelbar von dem Fluid beaufschlagt werden. Dabei ist es meist wünschenswert, daß bereits verlegte Rohrleitungen, insbesondere in Wasserversorgungsnetzen, zum Anbringen der Meßstelle und des Reflektors nicht vom Erdreich freigelegt werden müssen. Deshalb sollen zum Anbringen dieser Elemente möglichst bis zur Erdoberfläche oder darüber hinaus ragende Teile des Rohrnetzes, z. B. vorhandene Stichleitungen oder Hydranten, verwendet werden.

Eine solche Möglichkeit ist in den Figuren 5 bis 7 dargestellt. Die Figur 5 zeigt eine kurze lotrechte Stichleitung 8 an einer Wasserversorgungsleitung R. Die Stichleitung 8 weist in der Nähe ihrer Anschlußstelle an die Hauptleitung einen Absperrschieber 10 sowie in ihrem oberen Bereich eine Be- und Entlüftungsleitung 11 mit einem Druckluftventil 12 auf. Am oberen Ende ist die Stichleitung 8 durch eine Verschlußkappe 9 abgeschlossen.

In der Figur 6 ist die Ausbildung der Stichleitung nach der Figur 5 als Meßstelle zum Anbringen eines Schallempfängers 1 dargestellt. Zu diesem Zweck wird die Verschlußkappe 9 entfernt und an ihrer Stelle als Schallempfänger ein Druckaufnehmer (Hydrophon) auf die Stichleitung 8 aufgesetzt. Dann wird der Absperrschieber geöffnet und die Stichleitung über die Leitung 11 vollständig entlüftet, so daß das Fluid F durch den Druck auf der Versorgungsleitung ansteigt und schließlich die druckempfindliche Meßfläche des Druckaufnehmers 1 erreicht.

Soll die Stichleitung als Schallreflektor ausgebildet werden, so behält sie gemäß der Figur 7 ihre Verschlußkappe 9 und es wird nach Öffnen des Absperrventiles 10 über das Druckventil 12 und die Leitung 11 so lange Druckluft eingeführt, bis das Fluid völlig aus der Stichleitung 8 verdrängt ist. In der Stichleitung befindet sich dann nur ein als Reflektor für die Schallwellen in der Hauptleitung wirkendes Luftpolster. Während der Messungen muß der Absperrschieber bei den Anordnungen nach den Figuren 6 und 7 ständig geöffnet bleiben. Bei der Ausbildung der Stichleitung als Reflektor (Figur 7) ist dafür Sorge zu tragen, daß immer ein ausreichend großes Luftpolster erhalten bleibt.

Ähnlich wie vorstehend für eine Stichleitung beschrieben, können auch Hydranten als Meßstellen oder Schallreflektoren ausgebildet werden.

Wenn in einem Rohrleitungssystem keine Stichleitungen oder Hydranten vorhanden sind, die als Meßstellen bzw. als Reflektoren ausgebildet werden können, oder wenn eine oberirdisch verlegte Rohrleitung leicht zugänglich ist, können diese Teile der Meßanordnung auch unmittelbar an der Rohrleitung angebracht werden. Dies kann z. B. mittels eines Anschlußstückes nach den Figuren 8 bis 10 geschehen.

Der Figur 8 zeigt das Anschlußstück im Schnitt. Es besteht aus einem an der durchbohrten Rohrwand R durch eine Schweißnaht befestigten Rohrnippel 13, in den ein mit seitlichen Bohrungen 17 versehener, becherförmiger Einsatz 15 so eingeschraubt ist, daß sein Boden mit der Innenwand der Rohrleitung fluchtet. Oben ist das Anschlußstück, wenn es nicht benutzt wird, durch eine Kappe 14 abgeschlossen.

In der Figur 9 ist das Anschlußstück in seiner Ausbildung als Meßstelle mit einem in dem becherförmigen Einsatz 15 befestigten Schallempfänger 1 dargestellt. Die Schutzkappe 14 wird dazu entfernt und der Einsatz 15 so weit in den Rohrnippel 13 eingeschraubt, daß seine seitlichen Bohrungen 17 in das Rohrinnere eintreten und das Fluid F durch die Bohrungen an die druckempfindliche Stirnfläche des Schallempfängers 1 gelangen kann. Der Schallempfänger kann z. B. ein kleiner piezoelektrischer oder piezoresistiver Druckwandler sein.

Zur Ausbildung des Anschlußstückes als Schallreflektor wird gemäß der Figur 10 ebenfalls die Schutzkappe 14 von dem Rohrnippel 13 entfernt und der becherförmige Einsatz 15 bis zur Freigabe seiner Bohrungen 17 durch die Rohrwand R in den Nippel 13 eingeschraubt. Auf das obere Ende des Einsatzes 15 ist bei dieser Anordnung ein haubenförmiger Behälter 16 aufgesetzt, der zusammen mit dem Innenraum des Einsatzes 15 ein Luftkissen 18 einschließt. Durch die Bohrungen 17 steht das Luftkissen 18 mit Fluid F in Verbindung. Das Luftkissen 18 muß so groß sein, daß es seine Funktion als Schallreflektor in dem Fluid F erfüllen kann.

**Patentansprüche**

1. Verfahren zum Orten von Leckstellen (L) an ein Strömungsmedium, zum Beispiel Fluid (F), führenden Rohrleitungen (R), insbesondere in Wasserversorgungsnetzen, bei dem die von dem Geräusch des an der Leckstelle (L) ausströmenden Fluids (F) erzeugten Schallwellen durch Schallempfänger (1, 2) im Bereich längs der Rohrleitung (R) aufgenommen werden und aus den Meßsignalen mittels eines Korrelationsverfahrens die Laufzeit der Schallwellen und damit die Entfernung der Leckstelle (L) von den Meßstellen bestimmt wird, dadurch gekennzeichnet, daß an der Rohrleitung (R) ein Schallempfänger (1) und in einem bekannten Abstand von diesem ein Schallreflektor (3) angeordnet werden, die beide unmittelbar von dem Fluid (F) beaufschlagt werden, und daß von dem Schallempfänger (1) nicht nur die von der Leckstelle (L) direkt ankommenden, sondern auch die von dem Schallreflektor (3) zurückgeworfenen Schallwellen erfaßt werden und das aufgenommene Signal durch eine Autokorrelationsanalyse ausgewertet wird.

2. Ortungsverfahren nach Anspruch 1, dadurch gekennzeichnet, daß das Spektrum des aufgenommenen Signals vor der Autokorrelationsanalyse durch Filterung aufbereitet wird.

3. Ortungsverfahren nach Anspruch 1 oder 2, dadurch gekennzeichnet, daß nach einer ersten Messung der Schallempfänger (1) und der dazugehörige Schallreflektor (3) gegeneinander ausgetauscht werden und mit dieser Anordnung eine weitere Messung durchgeführt wird.

4. Ortungsverfahren nach Anspruch 1, 2 oder 3, dadurch gekennzeichnet, daß vor der Leckstellenortung mittels einer Autokorrelationsanalyse die Ausbreitungsgeschwindigkeit der Schallwellen in dem Fluid (F) bestimmt wird.

5. Ortungsverfahren nach Anspruch 4, dadurch gekennzeichnet, daß in der Rohrleitung (R) ein Schallsender angebracht wird.

6. Einrichtung zum Durchführen des Ortungsverfahrens nach den Ansprüchen 1 bis 5, gekennzeichnet durch einen an einer Rohrleitung (R) angeordneten Schallempfänger (1), einen in bekanntem Abstand von diesem angeordneten Schallreflektor (3) und eine Vorrichtung zur Autokorrelationsanalyse der vom Schallempfänger (1) gelieferten Signale, und durch eine solche Ausbildung des Schallreflektors (3), daß dieser die aus dem dem Schallempfänger (1) angewandten Abschnitt der Rohrleitung (R) kommenden Störgeräusche entweder ebenfalls reflektiert oder absorbiert.

7. Einrichtung nach Anspruch 6 für Flüssigkeitsleitungen, dadurch gekennzeichnet, daß der Schallreflektor (1) ein Gasvolumen, insbesondere ein Luftvolumen (18) ist, das mit der Flüssigkeit (F) in der Rohrleitung (R) mindestens während der Messungen in Verbindung steht.

8. Einrichtung nach Anspruch 6, insbesondere für Gasleitungen, dadurch gekennzeichnet, daß der Schallreflektor (3), mindestens auf der dem Schallempfänger (1) zugewandten Seite, eine akustisch harte Fläche besitzt, zum Beispiel wie bei einem mindestens teilweise geschlossenen Schieber.

9. Einrichtung nach Anspruch 7, jedoch mit mehreren Schallempfängern (1) und -reflektoren (3), dadurch gekennzeichnet, daß die Schallempfänger (1) und die Schallreflektoren (3) an vorhandenen Anschlußstellen der zu untersuchenden Hauptrohrleitung (R), zum Beispiel an kurzen Zweigleitungen (8) oder Hydranten, angebracht sind.

10. Einrichtung nach Anspruch 9, dadurch gekennzeichnet, daß an einem etwa lotrecht verlaufenden Abschnitt der Zweigleitungen (8) oder an den Hydranten eine Be- und Entlüftungseinrichtung (11, 12) vorgesehen ist, welche es ermöglicht, den Zweigleitungsabschnitt (8) oder den Hydranten wahlweise als Anschluß für einen Schallempfänger (1) oder als Schallreflektor (3) auszubilden.

11. Einrichtung nach Anspruch 7, jedoch mit mehreren Schallempfängern (1) und -reflektoren (3), dadurch gekennzeichnet, daß die Schallempfänger (1) und die Schallreflektoren (3) über in der Wand der Rohrleitung (R) angebrachte Nippel (13) unmittelbar an die Hauptleitung (R) angeschlossen sind.


## Claims

1. Process for locating leakage points (L) on pipe mains (R) conducting a flowing medium, for example fluid (F), in particular in a water supply network, in which the sound waves produced by the noise of the fluid (F) streaming out at the leakage point (L) are received by sound pickups (1, 2) in the region along the length of the pipe main (R), and the running time of the sound waves and hence the distance of the leakage point (L) from the measuring points is determined from the test signals by means of a correlation process, characterised in that a second pickup (1) and, at a known distance from this, a sound reflector (3) are arranged on the pipe main (R), both being immediately accessible to the fluid (F), and that not only the sound waves arising directly from the leakage point (L) but also the sound waves thrown back by the sound pickup (1), and the signal received is evaluated by an autocorrelation analysis.

2. Locating process according to claim 1, characterised in that the spectrum of the signal received is processed by filtering before the autocorrelation analysis.

3. Locating process according to claim 1 or 2, characterised in that the sound pickup (1) and its associated sound reflector (3) are exchanged for one another after a first measurement, and a further measurement is carried out with this arrangement.

4. Locating process according to claim 1, 2 or 3, characterised in that the dispersion speed of the sound waves in the fluid (F) is determined before the leakage point location by means of an autocorrelation analysis.

5. Locating process according to claim 4, characterised in that a sound transmitter is fixed in the pipe main (R).

6. Arrangement for carrying out the locating process according to claims 1 to 5, characterised by a second pickup (1) arranged on a pipe main (R), a sound reflector (3) at a known distance from the sound pickup and a device for the autocorrelation analysis of the signals delivered by the sound reflector (3) as reflects or absorbs equally interference coming from the section of the pipe main (R) used for the sound pick up (1).

7. Device according to claim 6 for fluid means, characterised in that the sound reflector (1) is a gas volume, in particular an air volume (18), which is in connection with the fluid (F) in the pipe mean (R) at least during measurement.

8. Device according to claim 6, especially for gas mains, characterised in that the sound reflector (3) comprises an acoustically hard surface, at least on the side facing the sound pick up (1), for example as in an at least partially closed slide.

9. Device according to claim 7, yet with several sound pick ups (1) and reflectors (3), characterised in that the sound pick ups (1) and the sound reflectors (3) are fixed to connection points of the pipeline (R) for example on short branching mains (8) or hydrants.

10. Device according to claim 9, characterised in that an airing and aerating device (11, 12) is provided on a section of the branch mains (8) or on the hydrants running roughly along a perpendicular, which allows the branching mains section (8) or the hydrants to form optionally a connection for a sound pick up (1) or a sound reflector (3).

11. Device according to claim 7, yet with several sound pick ups (1) and reflectors (3), characterised in that the sound pick ups (1) and the sound reflectors (3) are connected across nipples (13) fixed in the wall of the pipe main (R) directly to the pipeline (R).


## Revendications

1. Procédé pour localiser des points de fuite (L) sur des canalisations (R) acheminant un milieu susceptible de couler, par exemple un fluide (F), en particulier dans des réseaux d'alimentation en eau, dans lequel les ondes sonores engendrées par le bruit du fluide (F) qui sort au point de fuite (L) sont

**0 053 721**

captées par des récepteurs acoustiques (1, 2) dans la zone située le long de la canalisation (R) et le temps de parcours des ondes sonores et, ainsi, la distance du point de fuite (L) aux points de mesure est déterminé à partir des signaux de mesure par un procédé de corrélation, caractérisé en ce qu'on place sur la canalisation (R) un récepteur acoustique (1) et, à une distance connue de celui-ci, un réflecteur acoustique (3), ceux-ci étant sollicités tous deux directement par le fluide (F), et en ce que le récepteur acoustique (1) capte non seulement les ondes sonores provenant directement du point de fuite (L), mais également les ondes sonores réfléchies par le réflecteur acoustique (3) et le signal capté est évalué par une analyse d'auto-corrélation.

2. Procédé de localisation selon la revendication 1, caractérisé en ce que l'on traite par filtrage le spectre du signal capté avant l'analyse d'auto-corrélation.

3. Procédé de localisation selon la revendication 1 ou 2, caractérisé en ce qu'après une première mesure, on échange mutuellement le récepteur acoustique (1) et le réflecteur acoustique (3) qui lui correspond et l'on effectue une autre mesure avec cette disposition.

4. Procédé de localisation selon la revendication 1, 2 ou 3, caractérisé en ce qu'avant la localisation du point de fuite par une analyse d'auto-corrélation, on détermine la vitesse de propagation des ondes sonores dans le fluide (F).

5. Procédé de localisation selon la revendication 4, caractérisé en ce qu'on place un émetteur acoustique dans la canalisation (R).

6. Dispositif pour la mise en œuvre du procédé de localisation selon les revendications 1 à 5, caractérisé par un récepteur acoustique (1) placé sur une canalisation (R), un réflecteur acoustique (3) placé à une distance connue de celui-ci et un dispositif d'analyse d'autocorrélation des signaux fournis par le récepteur acoustique (1), et par une conformation du réflecteur acoustique (3) telle que celui-ci également réfléchi ou absorbe les bruits parasites provenant de la section de la canalisation (R) associée au récepteur acoustique (1).

7. Dispositif selon la revendication 6 pour canalisations de liquides, caractérisé en ce que le réflecteur acoustique (1) est un volume gazeux, en particulier un volume d'air (18) qui est en liaison avec le liquide (F) se trouvant dans la canalisation (R), au moins pendant les mesures.

8. Dispositif selon la revendication 6, en particulier pour canalisations de fluides gazeux, caractérisé en ce que le réflecteur acoustique (3) comporte, au moins du côté du récepteur acoustique (1), une surface acoustiquement dure, par exemple comme dans un tiroir au moins partiellement fermé.

9. Dispositif selon la revendication 7, mais avec plusieurs récepteurs acoustiques (1) et réflecteurs acoustiques (3), caractérisé en ce que les récepteurs acoustiques (1) et les réflecteurs acoustiques (3) sont placés en des points de raccordement existants de la canalisation principale (R) à examiner, par exemple sur des conduites dérivées courtes (8) ou des prises d'eau.

10. Dispositif selon la revendication 9, caractérisé en ce qu'il est prévu sur une section de conduite dérivée (8) s'étendant sensiblement verticalement ou sur une prise d'eau un dispositif d'aérage et de désaérage (11, 12) qui permet de conformer la section de conduite de dérivation (8) ou la prise d'eau à volonté en raccord pour un récepteur acoustique (1) ou un réflecteur acoustique (3).

11. Dispositif selon la revendication 7, mais comportant plusieurs récepteurs acoustiques (1) et réflecteurs acoustiques (3), caractérisé en ce que les récepteurs acoustiques (1) et les réflecteurs acoustiques (3) sont raccordés directement à la canalisation principale (R) au moyen de nipples (13) rapportés dans la paroi de la canalisation (R).

FIG. 1

FIG. 2

FIG. 3

FIG. 4

FIG. 5

FIG. 6

FIG. 7

FIG. 8

FIG. 9

FIG. 10

FIG. 11